# EUROPEAN PATENT APPLICATION

(11) **EP 3 418 105 A1**
(43) Date of publication of application: **26.12.2018**
(21) Application number: 18178871.2
(22) Date of filing: 20.06.2018
(51) Int. Cl.: B60L 8/00, B60L 11/18, H02J 7/35, H02S 10/40

(54) **TRAILER-TYPE ENERGY VEHICLE**

(30) Priority: 20.06.2017 CN 201710469726; 14.06.2018 WO PCT/CN2018/091261
(71) Applicant: Beijing Apollo Ding Rong Solar Technology Co., Ltd., Beijing 100176 (CN)
(72) Inventor: WANG, Yunfang, Beijing, Beijing 100176 (CN); DAI, Fengyu, Beijing, Beijing 100176 (CN); HUO, Yanyin, Beijing, Beijing 100176 (CN); CAO, Zhifeng, Beijing, Beijing 100176 (CN)
(74) Representative: D'Halleweyn, Nele Veerle Trees Gertrudis

(57) **Abstract**

A trailer-type energy vehicle includes a trailer-type compartment, a reel-type packaged flexible photovoltaic power generation device and an electrical system. The reel-type packaged flexible photovoltaic power generation device is arranged in the trailer-type compartment and includes a winding mechanical device and a reel-type flexible photovoltaic power generation strip. The reel-type flexible photovoltaic power generation strip is wound on the winding mechanical device. The electrical system is connected with the reel-type flexible photovoltaic power generation strip.

## Description

### Technical Field

The application relates to, but is not limited to, the technical field of solar power generation, and in particular relates to, but is not limited to, a trailer-type energy vehicle.

### Background

Today's society relies mainly on traditional fossil energy sources. And 74 % of the total global energy consumption comes from coal, oil, natural gas and other mineral sources. The application of fossil energy has promoted the development of society, but the resources are increasingly exhausted. The uncontrolled use of fossil energy has caused serious environmental pollution and climate change problems. Countries all over the world deem the development of renewable energy and the new energy as an important component of their future energy strategy, and solar energy is one important development target thereof.

As a result of the rapid development of solar cells, especially flexible solar cells such as thin films, there is a prospect that these problems can be solved. At present, corresponding products have emerged in the market, such as solar charging paper, solar charging bag, etc. However, such charging equipment can only meet the short-term emergency use. The solar power generation is unstable and thus cannot meet the power supply requirement needed by large or medium-sized appliances.

With the emergence of flexible solar panels, many portable solar charging devices have been invented, but these portable solar charging devices still have many flaws, such as the area of available solar panels is too small, or the solar charging devices are not easy to carry. For example, a common solar battery pack structure includes two substrates which are hinged with each other. The solar cell is set on the substrate, the solar cell is also provided with the upper over. This solar battery pack can be folded around. However, the solar battery pack substrate is made of hard material and can only be folded simply. After being folded, the area thereof is still very large. Moreover, the thickness of the solar battery pack is also very thick, which makes the battery pack inconvenient to carry. The power of cell assemblies that can be held in the solar battery pack is not high enough.

### Summary

The following is an overview of the subject matter described in detail herein. This summary is not intended to limit the protection scope of the claims.

The application provides a trailer-type energy vehicle based on flexible solar power generation. By disposing the details of the device and optimizing the packaging method, the warping method and the electrical structure, the reel-type power generation device is suitable for power supply of higher-power electrical appliances and can ensure stable power supply for a long time.

An embodiment of the application provides a trailer-type energy vehicle based on flexible solar power generation, comprising an expandable trailer-type compartment, a reel-type packaged flexible photovoltaic power generation device, a power generation circuit equipment and a panel. The reel-type packaged flexible photovoltaic power generation device is arranged in the expandable trailer-type compartment and comprises a winding mechanical device and a reel-type flexible photovoltaic power generation strip. The reel-type flexible photovoltaic power generation strip is wound on the winding mechanical device; the power generation circuit equipment is connected with the reel-type flexible photovoltaic power generation strip. The panel is arranged at the center of the side surface of the roller, and is provided with input and output ports and is connected with a panel circuit, a protection circuit and the power generation circuit equipment.

In an exemplary embodiment, the reel-type flexible photovoltaic power generation strip consists of a plurality of reel-type packaged flexible assembly modules. The reel-type packaged flexible assembly module consists of a packaging cloth, a cable and a flexible photovoltaic assembly.

In an exemplary embodiment, the reel-type packaged flexible assembly module consists of a plurality of flexible photovoltaic assemblies attached to a wear-resistant interlining cloth, the edges of the wear-resistant interlining cloth are folded to form a wrapping effect, and the four sides of the assembly are wrapped with a sealant.

In an exemplary embodiment, the surface of the packaging cloth is provided with a thin tubular storage hidden bag for holding cables; the thin tubular storage hidden bag has an overall layout of an "H" shape, and the middle horizontal part is used for in series connection of a horizontally arranged assembly; the longitudinal parts on both sides are used for arranging a bus cable bundle; the four ends of the reel-type packaged flexible assembly module are designed with a "T" shaped bus device and reserved with a connection port for electrical in parallel connection of two reel-type packaged flexible assembly modules or electrical connection of the reel-type packaged flexible assembly modules with the electrical device inside the roller;
the "T" shaped bus device is composed of a cable and connectors, and has three identical plug-in terminals to form the function of an electrical tee; the connector is sealed with a waterproof.

In an exemplary embodiment, a plurality of reel-type packaged flexible assembly modules are connected in parallel to form a standard string, a group of bus cables is used, the number of which is the same as that of the standard strings, each group of bus cables is connected with a maximum power point tracking device, and each group of bus cables comprises one positive cable and one negative cable.

In an exemplary embodiment, the winding mechanical device comprises a roller, a rocker arm and an auxiliary motor;
the roller is for warping and storing the reel-type packaged assembly, the two ends of the roller are provided with flanging designs, and are used for limiting the assembly; the rocker arm is a retractable rocker arm, and is used for rotating the roller; and the auxiliary motor is linked with the roller to rotate the roller through electric power;
the diameter of the roller is not more than 550 mm.

In an exemplary embodiment, both ends of the packaging cloth in each reel-type packaged flexible assembly module are provided with a plurality of holes and hook-and-loop fasteners for fixing, hanging or mechanical connection among a plurality of cloth blocks, and both ends of the packaging cloth are provided with an elongated and rod-shaped hard material with the same width as the cloth block, which horizontally passes through the cloth block and is used for supporting the cloth block to prevent deformation of the cloth block in use.

In an exemplary embodiment, the trailer-type energy vehicle further comprises a bonded-type flexible photovoltaic assembly device directly attached to the top and side facade of the energy vehicle to form three standard strings; the bonded-type flexible photovoltaic assembly device adopts a flexible photovoltaic assembly designed by ETFE flexible packaging and is directly attached to the openable top and facade side panel of the trailer-type compartment; it also provided with a cover and a groove. The bonded-type flexible photovoltaic assembly device is connected with the power generation circuit equipment.

In an exemplary embodiment, a power generation circuit equipment is arranged in the roller, an electrical system is arranged in the winding mechanical device. The electrical system comprises a maximum power tracker, a DC power supply, a charging circuit, an AC power supply, a battery and a panel circuit, each group of bus cables is connected with the maximum power point tracking device, and then is respectively connected with the battery and/or the AC power supply and/or the charging circuit after passing through the DC power supply, and is connected with the panel circuit through a protection circuit, and an inverter is connected between the DC power supply and the AC power supply.

In an exemplary embodiment, the power of each maximum power point tracking device MPPT may be 300 to 2000 w, and in an example, is 1500 w;
the DC power supply converts fluctuating photovoltaic power generation into a stable DC power supply for charging the battery, driving an external DC electrical appliance and supplying inverter to work, the DC power supply can output direct current of various voltage levels of 5V, 12V and 24V, and the power may be 300 - 1500 W, in an example, is 800 W;
the AC power supply is provided with an inverter for converting direct current from the DC power supply or the battery into an AC power supply of 110V or 220V by the inverter for an external AC electrical appliance use, and the power may be 1000 to 3000 w, in an example, is 2000 W;
the battery is for energy storage, and a colloidal battery or lithium battery may be used, energy storage may be 1000 Wh to 5000 Wh, and in an example, is 3000 Wh;
the charging circuit is for converting alternating current to be used for charging the battery, and when the outside world does not have sunlight or does not use solar energy to generate electricity, the charging circuit uses the alternating current supplied from the outside to charge the battery;
the panel circuit comprises a protection circuit and a panel. The protection circuit uses a fuse to protect the output power supply from short circuit. The panel consists of an AC socket, a DC socket, a USB socket and a charging interface.

An embodiment of the application also provides a trailer-type energy vehicle based on solar power generation, which uses a winding mechanical device to wind and store, or unwind and deploy a reel-type flexible photovoltaic power generation strip, so that the reel-type packaged flexible photovoltaic power generation device has small volume, is convenient to carry, has high power generation, is suitable for power supply of larger power appliances, and can ensure stable power supply for a long time.

The trailer-type energy vehicle provided in the embodiment of the application comprises a trailer-type compartment, a reel-type packaged flexible photovoltaic power generation device and an electrical system;
the reel-type packaged flexible photovoltaic power generation device is arranged in the trailer-type compartment and comprises a winding mechanical device and a reel-type flexible photovoltaic power generation strip, the reel-type flexible photovoltaic power generation strip is wound on the winding mechanical device;
the electrical system is connected with the reel-type flexible photovoltaic power generation strip.

In the energy vehicle, the reel-type flexible photovoltaic power generation strip not only can generate electricity by solar energy, but also has good flexibility and bendability. By using the characteristics in cooperation with the winding mechanical device, the reel-type flexible photovoltaic power generation strip is wound and accommodated on the winding mechanical device, and can be unwound from the winding mechanical device to generate electricity when in use. The winding arrangement mode enables the reel-type packaged flexible photovoltaic power generation device to be small in volume and convenient to carry; and the winding mode is beneficial to arranging a large number of flexible photovoltaic power generation modules, so that the solar power generation device has high generation power and excellent stability. In addition, the winding mechanical device is simple in structure and low in failure rate, which is beneficial to the stable operation of the solar power generation device.

In an exemplary embodiment, the winding mechanical device comprises a roller, the trailer-type energy vehicle further comprises a panel arranged at the central position on the side surface of the roller, the panel is provided with input and output ports, and is connected with the electrical system.

In an exemplary embodiment, the trailer-type compartment is expandable and adopts an openable side panel and an openable top panel.

In an exemplary embodiment, the reel-type flexible photovoltaic power generation strip comprises a plurality of reel-type packaged flexible assembly modules, the reel-type packaged flexible assembly module comprising:
a packaging cloth;
a flexible photovoltaic assembly attached to the packaging cloth or a plurality of flexible photovoltaic assemblies attached to the packaging cloth; and
a cable.

In an exemplary embodiment, the edges of the packaging cloth are folded to form a wrapping effect, and the four sides of the flexible photovoltaic assembly are wrapped by a sealant.

In an exemplary embodiment, the surface of the packaging cloth is provided with a thin tubular storage hidden bag for holding the cable.

In an exemplary embodiment, the plurality of flexible photovoltaic assemblies are horizontally arranged on the packaging cloth, and the cables comprise a serial cable connecting the horizontally arranged flexible photovoltaic assemblies in series, and bus cable bundles connecting the plurality of reel-type packaged flexible assembly modules in parallel.

In an exemplary embodiment, the surface of the packaging cloth is provided with a thin tubular storage hidden bag, the overall layout of the thin tubular storage hidden bag is "H" shaped, the middle horizontal part is arranged to hold the serial cable between the horizontally arranged flexible photovoltaic assemblies, and the longitudinal parts at both sides are set to arrange and collect the bus cable bundle.

In an exemplary embodiment, two or four ends of the reel-type packaged flexible assembly module are designed with a "T" shaped bus device and reserved with a connector, and the connector is arranged to realize electrical in parallel connection of two reel-type packaged flexible assembly modules or to realize connection of the reel-type packaged flexible assembly module with the electrical system.

In an exemplary embodiment, the plurality of reel-type packaged flexible assembly modules are connected in parallel through a group of bus cables to form a standard string, each group of bus cables is connected to a maximum power point tracking device provided in the electrical system, and each group of bus cables includes one positive cable and one negative cable.

In an exemplary embodiment, the winding mechanical device comprises a roller, a rocker arm, and an auxiliary motor,
the roller is arranged to warping and holding the reel-type flexible photovoltaic power generation strip, and two ends of the roller are provided with flanging;
the rocker arm is a retractable rocker arm and is arranged to rotate the roller;
the auxiliary motor is linked with the roller and is arranged to rotate the roller through electric power.

In an exemplary embodiment, both ends of the packaging cloth in each of the reel-type packaged flexible assembly modules are provided with one or more of a hole, a hook-and-loop fastener and a hard material,
a plurality of holes are provided to engage two reel-type packaged flexible assembly modules;
the hook-and-loop fastener is arranged to bonded connect two reel-type packaged flexible assembly modules;
the hard material has the same width as the packaging cloth, is elongated and rod-shaped, is arranged at both ends of the packaging cloth and horizontally passes through the packaging cloth.

In an exemplary embodiment, the trailer-type energy vehicle further comprises a flexible photovoltaic assembly device directly attached to the openable top panel and side panel of the trailer-type compartment, and the flexible photovoltaic assembly device is connected to the electrical system.

In an exemplary embodiment, the flexible photovoltaic assembly device attached to the openable top panel and side panel of the trailer-type compartment constitutes three standard strings, each standard string being connected to a maximum power point tracking device in the electrical system.

In an exemplary embodiment, the electrical system comprises:
a maximum power point tracking device;
a DC power supply connected to the maximum power point tracking device;
a panel circuit connected with the DC power supply, the panel circuit comprising a protection circuit;
the panel circuit is connected with the input and output ports on the panel.

In an exemplary embodiment, the electrical system further comprises one or more of an energy storage battery, an AC power supply, and a charging circuit connected to the DC power supply,
the energy storage battery is arranged to store energy;
the AC power supply is provided with an inverter or is connected with the DC power supply through the inverter and is arranged to be connected with the protection circuit so as to supply power to an external AC electrical appliance;
the charging circuit is arranged to charge the energy storage battery by using the alternating current supplied from the outside.

In an exemplary embodiment, the trailer-type energy vehicle further comprises a towing hook connected to the trailer-type compartment and a power interface circuit arranged on the towing hook, the power interface circuit is connected with the protection circuit and is arranged to supply power to an external vehicle in need of electricity.

In an exemplary embodiment, the electrical system is arranged inside the winding mechanical device.

The reel-type packaged flexible photovoltaic power generation device of the trailer-type energy vehicle based on flexible solar power generation in the embodiment of the application is stable in structure and is not easy to fail. The trailer-type energy vehicle based on flexible solar power generation is convenient to carry and can be trailer-type and pulled by automobile equipment; a solar photovoltaic power generation device is arranged on the outer surface, so that power may be generated as long as there is sunshine. The trailer-type energy vehicle based on flexible solar power generation is suitable for a long-time off-grid environment, and can supply power to high-power equipment. By disposing the details of the device and optimizing the packaging method, the warping method and the electrical structure, the trailer-type energy vehicle based on flexible solar power generation is suitable for power supply of higher-power electrical appliances and can ensure stable power supply for a long time, and the maximum power can reach 3000 W. The trailer-type energy vehicle based on flexible solar power generation has less occupied space, is convenient to carry, has high utilization rate, and is suitable for off-grid power supply of large, medium and small-sized automobile equipment.

Other aspects will become apparent after reading and understanding the brief description of the drawings and the embodiments of the present application.

### Brief Description of Drawings

When considered in combination with the accompanying drawings, the embodiments of the present application and many of the accompanying advantages thereof can be understood more completely and better by referring to the following detailed description. However, the drawings described herein are used to provide a further understanding of the embodiments of the present application and form a part of the embodiments of the present application. The illustrative embodiments of the present application and the description thereof are used to explain the present application and do not constitute a limitation on the present application. As shown in the figures:
FIG. 1 is a schematic structural diagram of a trailer-type energy vehicle based on flexible solar power generation according to an embodiment of the present application.
FIG. 2 is a schematic structural diagram of a reel-type packaged flexible assembly module according to an embodiment of the present application.
FIG. 2a is a schematic cross-sectional view from the top of the structure of the reel-type packaged flexible assembly module shown in FIG. 2, and the cross-sectional lines are not shown.
FIG. 2b is a schematic cross-sectional view from the left of the structure of the reel-type packaged flexible assembly module shown in FIG. 2, and the cross-sectional lines are not shown.
FIG. 3 is a schematic structural diagram of two reel-type packaged flexible assembly modules after connected according to an embodiment of the present application.
FIG. 3a is an enlarged schematic view of the structure of part A in FIG. 3.
FIG. 4 is a schematic diagram of a circuit connection structure of a reel-type packaged flexible assembly module according to an embodiment of the present application.
FIG. 5 is a schematic structural diagram of a "T" shaped bus device according to an embodiment of the present application.
FIG. 6 is a schematic diagram of a circuit structure of a trailer-type energy vehicle according to an embodiment of the present application.

### Detailed Description

The present application will be further explained with reference to the accompanying drawings and examples.

In an example, a trailer-type energy vehicle based on flexible solar power generation includes an expandable trailer-type compartment 1, a reel-type packaged flexible photovoltaic power generation device 2 and a power generation circuit equipment 3.

The reel-type packaged flexible photovoltaic power generation device 2 is arranged in the expandable trailer-type compartment 1 and comprises a winding mechanical device and a reel-type flexible photovoltaic power generation strip 4, the reel-type flexible photovoltaic power generation strip is wound on the winding mechanical device.

The power generation circuit equipment is connected with the reel-type flexible photovoltaic power generation strip.

The panel is arranged at the center of the side surface of the roller, is provided with input and output ports and is connected with the panel circuit.

The main body of the trailer-type energy vehicle is the trailer-type compartment 1, which is connected to the vehicle by means of a towing hook 5 to be towed and moved.

A power interface circuit 6 is designed at the towing hook to supply the energy from the vehicle to the external vehicle(s) for use.

The facade of the trailer-type energy vehicle adopts an openable side panel, which can be horizontally unfolded and fixed.

The top surface of the trailer-type energy vehicle adopts an openable top panel 7, the opening angle of which can be adjusted; the equipment in the vehicle can be operated after it is opened.

The front of the trailer-type vehicle is designed with a function panel, which comprises a data display screen, a function switch and an energy interface.

The reel-type flexible photovoltaic power generation strip 4 is composed of a plurality of reel-type packaged flexible assembly modules 8. The reel-type packaged flexible assembly module is composed of a packaging cloth 9, a cable and a flexible photovoltaic module 10, and the number of the assembly modules is 2 to 10, in an example, is 6.

The reel-type packaged flexible assembly module consists of a plurality of photovoltaic assemblies attached to a wear-resistant interlining cloth, the edges of the wear-resistant interlining cloth are folded to form a wrapping effect, and four sides of the assembly are wrapped by a sealant, and the number of the photovoltaic assemblies is 2 to 12, in an example, is 6.

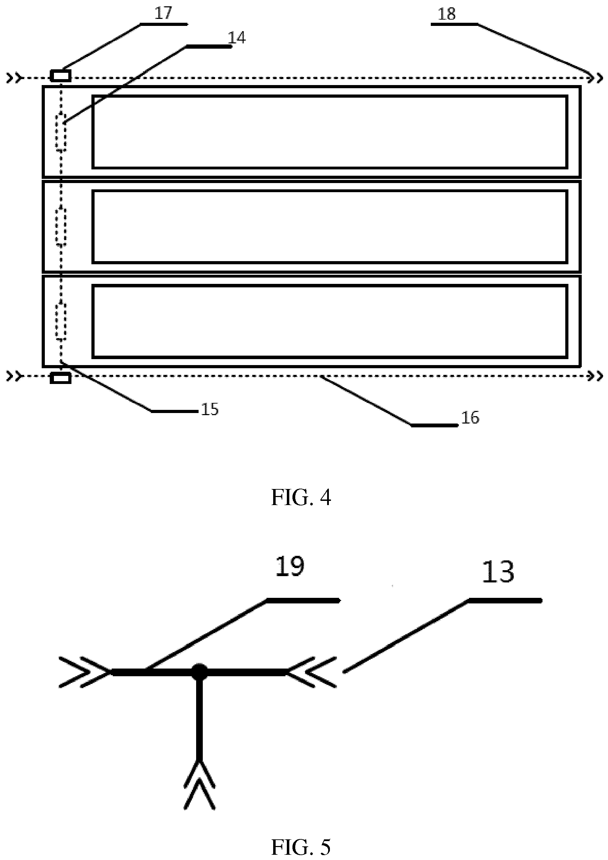

The surface of the packaging cloth is provided with a thin tubular storage hidden bag 11 for holding a cable; the overall layout of the thin tubular storage hidden bag is "H" shaped, and the middle horizontal part is used for the in series connection of the horizontal assemblies. As shown in FIG. 4, three horizontal assemblies connect the assembly outlet boxes 14 in series through the horizontal serial cable 15.

Longitudinal parts on both sides of the hidden bag are used for arranging the bus cable bundle 16; the four ends of the reel-type packaged flexible assembly module are designed with a "T" shaped bus device 17 and reserved with a connection port 18 for electrical in parallel connection of two reel-type packaged flexible assembly modules or electrical connection of the reel-type packaged flexible assembly module with the electrical device inside the roller. The design of arranging cable along the outer edge can reduce the thickness of the reel and improve the longitudinal mechanical strength of the reel.

The surface of the packaging cloth is provided with a thin tubular storage hidden bag at the side, which can be used for arranging and connecting cables, the storage hidden bag is arranged between the back of the assembly and the interlining cloth.

As shown in FIG. 5, the "T" shaped bus device is composed of a cable 19 and connectors 13, it has three identical plug-in terminals to form the function of an electrical tee, the connector is sealed with a waterproof.

The reel-type packaged flexible assembly module adopts modular design and can realize in parallel bus through end-to-end connection, thus achieving the effect of capacity expansion.

A plurality of reel-type packaged flexible assembly modules are connected in parallel to form a standard string, a group of bus cables is used, the number of which is the same as that of the standard strings. Each group of bus cables is connected with a maximum power point tracking device, and each group of bus cables comprises one positive cable and one negative cable. Each standard string corresponds to an MPPT device. Such design ensures the independent power generation control of the standard string. Even if some of the standard string are partially damaged, shaded and not pulled out, the normal standard string can still generate power with maximum efficiency.

The winding mechanical device comprises a roller, a rocker arm and an auxiliary motor 8.

The roller is for warping and accommodating the reel-type packaged assembly, the two ends of the roller are provided with flanging designs, and are used for limiting the assembly. The rocker arm is a retractable rocker arm, and is used for rotating the roller. The auxiliary motor is linked with the roller, and rotates the roller by electric power. The diameter of the roller is 500mm.

In an exemplary embodiment, both ends of the packaging cloth in each reel-type packaged flexible assembly module are provided with a plurality of holes 11 and hook-and-loop fasteners 12 for fixing and mechanical connection between cloth blocks, and both ends of the packaging cloth are provided with an elongated and rod-shaped hard material with the same width as the cloth block that horizontally passes through the cloth block for supporting the cloth block to prevent deformation of the cloth block in use, thereby improving the horizontal mechanical strength of the reel.

The modules are engaged in parallel to the power generation circuit through the connector 13, and the two modules are engaged by means of holes 11 and connected in an bonded manner by means of nylon hook-and-loop fasteners 12.

The trailer-type energy vehicle also comprises a bonded-type flexible photovoltaic assembly device directly attached to the top and side facade of the energy vehicle to form three standard strings. The bonded-type flexible photovoltaic assembly device adopts a flexible photovoltaic assembly designed by ETFE flexible packaging, is directly attached to the openable top and facade side panel of the trailer-type compartment, and is designed with a cover and a groove.

A power generation circuit equipment is arranged in the roller, an electrical system is arranged in the winding mechanical device. The electrical system comprises a maximum power tracker, a DC power supply, a charging circuit, an AC power supply, a battery and a panel circuit, each group of bus cables is connected with the maximum power point tracking device, then is respectively connected with the battery and/or the AC power supply after passing through the DC power supply, and finally is connected with the panel circuit, and an inverter is connected between the DC power supply and the AC power supply.

The power of each maximum power point tracking device MPPT may be 1200 W.

The DC power supply converts fluctuating photovoltaic power generation into a stable DC power supply for charging the battery, driving an external DC electrical appliance and supplying inverter to work. The DC power supply can output direct current with various voltage levels of 5V, 12V and 24V, and the power may be 1000 W.

The AC power supply is provided with an inverter, and is used for converting direct current from a DC power supply or a battery into an AC power supply of 110V or 220V by the inverter for an external AC electrical appliance use, and the power may be 1200 W.

The battery is for energy storage, a lithium battery may be used, and energy storage may be 2000 Wh.

The charging circuit is for converting alternating current to be used for charging the battery, and when the outside world does not have sunlight or does not use solar energy to generate electricity, the charging circuit uses the alternating current supplied from the outside to charge the battery.

The panel circuit comprises a protection circuit and a panel. The protection circuit uses a fuse to protect the output power supply from short circuit. The panel consists of an AC socket, a DC socket, a USB socket and a charging interface.

When in use, the trailer-type energy vehicle based on flexible solar power generation can be trailer-type behind the towing automobile and can supply power to the towing automobile through the interface circuit of the towing system, both the top cover and the side panel of the energy vehicle can generate electricity to produce electrical energy. When high power generation is required, the top cover can be opened, and the reel-type flexible photovoltaic power generation strip on the reel can be unfolded to generate electricity. Since an energy storage battery is arranged inside, electricity can still be stably supplied even under the condition that the sunshine is not sufficient. Thus, the trailer-type energy vehicle based on flexible solar power generation is suitable for long-term field use, and can supply power for high-power appliances, and it is easy to store. When it is not used, it takes up less space.

A trailer-type energy vehicle based on flexible solar power generation will be further described in detail below.

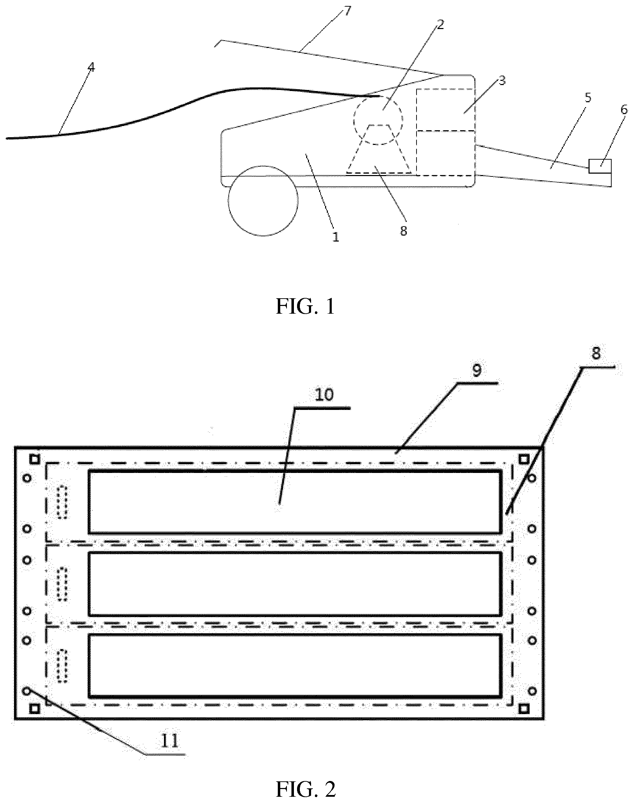

FIG. 1 shows a trailer-type energy vehicle based on flexible solar power generation according to an embodiment of the present application, which comprises an expandable trailer-type compartment 1, a reel-type packaged flexible photovoltaic power generation device 2, and an electrical system 3;
the reel-type packaged flexible photovoltaic power generation device 2 is arranged in the expandable trailer-type compartment 1 and comprises a winding mechanical device and a reel-type flexible photovoltaic power generation strip 4, the reel-type flexible photovoltaic power generation strip 4 is wound on the winding mechanical device;
the electrical system is connected to the reel-type flexible photovoltaic power generation strip 4.

The reel-type flexible photovoltaic power generation strip 4 can generate power using solar energy, and it is flexible and can be bent. The winding mechanical device can rotate to wind the reel-type flexible photovoltaic power generation strip 4 on the winding mechanical device, accommodate the reel-type flexible photovoltaic power generation strip 4, and reduce the volume of the reel-type packaged flexible photovoltaic power generation device 2 so as to facilitate carrying; the winding mechanical device can also rotate in the opposite direction to unwind the reel-type flexible photovoltaic power generation strip 4 wound thereon to deploy the reel-type flexible photovoltaic power generation strip 4 to increase the light receiving area of the reel-type flexible photovoltaic power generation strip 4 and increase the generated power of the reel-type packaged flexible photovoltaic power generation device 2.

The trailer-type compartment 1 of the trailer-type energy vehicle can be towed and moved by equipment such as an automobile, thereby driving the reel-type packaged flexible photovoltaic power generation device 2 installed in the trailer-type compartment 1 to move together, so that the trailer-type energy vehicle is convenient to carry and has high utilization rate. Due to large generated power of the reel-type packaged flexible photovoltaic power generation device 2, the trailer-type energy vehicle is suitable for long-term off-grid environment, can supply power to high-power equipment, can ensure stable power supply for a long time, and is suitable for off-grid power supply of large, medium and small-sized automobile equipments.

The winding mechanical device comprises a roller which can wind and receive, or unwind and deploy the reel-type flexible photovoltaic power generation strip 4 when rotating in different directions. The panel is arranged at the center of the side surface of the roller, and is provided with input and output ports and is connected with a panel circuit.

The electrical system is electrically connected with the reel-type flexible photovoltaic power generation strip 4 so that the electrical energy generated by the reel-type flexible photovoltaic power generation strip 4 is transmitted to the electrical system, and the electrical system supplies power to the external equipment(s) through the input and output ports of the panel.

The main body of the trailer-type energy vehicle is the trailer-type compartment 1, which is connected to a towing vehicle by means of a towing hook 5 to be towed and moved.

The towing hook 5 is provided with a power interface circuit 6 to supply the energy in the vehicle to external vehicle(s) in need of electricity, such as a tractor for the trailer-type energy vehicle, a limo, a police car, an ambulance, a fire vehicle, an automobile, etc.

The facade of the trailer-type energy vehicle is provided by an openable side panel, which can be horizontally unfolded and fixed.

The top surface of the trailer-type energy vehicle adopts an openable top panel 7, the opening angle of which can be adjusted, and the equipment in the vehicle can be operated after it is opened.

A functional panel is designed on the front of the trailer-type energy vehicle, and the functional panel comprises a data display screen, a functional switch and an energy interface.

The energy interface for supplying power to the external vehicle(s) in need of electricity is located on the power interface circuit 6, and the function panel is located at the towing hook 5.

The reel-type flexible photovoltaic power generation strip 4 comprises a plurality of reel-type packaged flexible assembly modules 8, and the reel-type packaged flexible assembly module 8 comprises a packaging cloth 9 (such as a wear-resistant interlining cloth), a cable, and a flexible photovoltaic assembly 10. The number of reel-type packaged flexible assembly modules 8 may be 2 to 10, for example, 6. It should be understood that the number of reel-type packaged flexible assembly modules 8 is not limited to this range and can be set according to actual needs.

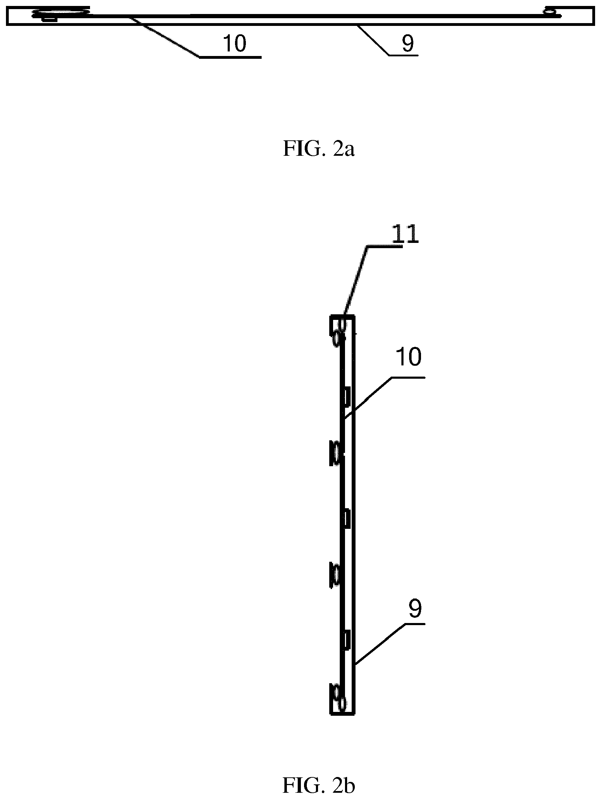

In the example shown in FIGS. 2 - 2b, the reel-type packaged flexible assembly module 8 comprises a plurality of flexible photovoltaic assemblies 10 attached to a wear-resistant interlining cloth 9, the edges of the wear-resistant interlining cloth 9 are folded to form a wrapping effect, and the four sides of the flexible photovoltaic assembly 10 are wrapped with a sealant. The number of flexible photovoltaic assemblies 10 may be 2 to 12, for example, 6. It should be understood that the number of flexible photovoltaic assemblies 10 is not limited to this range and can be set according to actual needs, for example, a piece of flexible photovoltaic assembly 10 can be arranged on a wear-resistant interlining cloth 9.

In the example shown in FIGS. 2 and 4, the reel-type packaged flexible assembly module 8 comprises three flexible photovoltaic assemblies 10, each of which extends in a direction perpendicular to the rotation axis of the winding mechanical device, and the three flexible photovoltaic assemblies 10 are arranged in a row along the direction of the rotation axis of the winding mechanical device, and the flexible photovoltaic assemblies 10 located in the same row are arranged at intervals along the direction of the rotation axis of the winding mechanical device.

The cables comprise a serial cable 15 and a bus cable bundle 16. The serial cable 15 is used for in series connection of the flexible photovoltaic assemblies 10 of the same row, and both ends of the serial cable 15 are connected with the bus cable book 16.

The surface of the packaging cloth 9 is provided with a thin tubular storage hidden bag for holding cables; the overall layout of the thin tubular storage hidden bag is "H" shaped, and the middle horizontal part of the thin tubular storage hidden bag is used for holding the serial cable 15 between the horizontal assemblies 10. As shown in FIG. 4, the outlet boxes 14 of the three flexible photovoltaic assemblies 10 are connected in series through the horizontal serial cable 15. Longitudinal parts of both sides of the thin tubular storage hidden bag are used for arranging the bus cable bundle 16.

The storage hidden bag is not limited to the above-mentioned "H" shape, and it may also be in other shapes, such as a "U" shape having two longitudinal parts and one horizontal part, etc.

The two or four ends of the reel-type packaged flexible assembly module 8 are designed with a "T" shaped bus device 17 and reserved with a connection port 18. The connection port 18 is arranged to realize the electrical in parallel connection of two reel-type packaged flexible assembly modules 8. The design of the cable arranging along the outer edge can reduce the thickness of the reel-type packaged flexible assembly module 8 and improve the longitudinal mechanical strength of the reel-type packaged flexible assembly module 8.

The surface of the packaging cloth is provided with a thin tubular storage hidden bag at the side, which can be used for arranging and connecting cables. The storage hidden bag can be arranged between the back of the flexible photovoltaic assembly 10 and the packaging cloth 9.

As shown in FIG. 5, the "T" shaped bus device 17 comprises a connection cable 19 and three connectors 13, the three connectors 13 form three identical plug-in terminals to form the function of an electrical tee, and the connector 13 is sealed with a waterproof.

The connection cable has a "T" shape, and the interface formed by the plug-in terminals is the connection interface 18.

The three connectors 13 are connected to three ends of the connection cable 19, and one end of the horizontal serial cable 15 in the cables is electrically connected to the bus cable 16 through two connectors 13 on a "T" shaped bus device 17, the other connector 13 on the "T" shaped bus device 17 can be used for connection when two reel-type packaged flexible assembly modules 8 are connected in parallel.

The reel-type packaged flexible assembly module 8 adopts a modular design, and adjacent reel-type packaged flexible assembly modules are connected end to end through the reserved connector 13, so that in parallel bus can be realized through the bus cable, thus achieving the effect of capacity expansion.

A plurality of reel-type packaged flexible assembly modules 8 are connected in parallel by using a group of bus cables to form a standard string, the number of bus cables is the same as that of the standard strings, each group of bus cables is connected to a maximum power point tracking device (i.e., MPPT device), and each group of bus cables comprises a positive cable and a negative cable. Each standard string corresponds to an MPPT device. Such design ensures the independent power generation control of the standard string. Even if some of the standard strings are damaged, shaded and not pulled out, the normal standard string can still generate power with maximum efficiency. It should be understood that each reel-type packaged flexible assembly module 8 can also be connected to an MPPT device through a group of bus cables, the number of reel-type packaged flexible assembly modules 8 and the number of the groups of bus cables are the same as the number of MPPT devices.

The winding mechanical device comprises not only a roller, but also a rocker arm and an auxiliary motor 8.

The roller is used for rolling and accommodating the reel-type flexible photovoltaic power generation strip 4, and both ends of the roller are provided with flanging designs for limiting the reel-type flexible photovoltaic power generation strip 4; the rocker arm is a retractable rocker arm and is used for rotating the roller; the auxiliary motor 8 is linked with the roller and rotates the roller by electric power. The diameter of the roller may not be greater than 550 mm, such as may be 500 mm. It should be understood that the rocker arm and the auxiliary motor 8 respectively realize manual rotation and electric drive rotation of the roller, or only one of the rocker arm and the auxiliary motor 8 may be provided so that the roller rotates only by manual rotation or is driven to rotate by a motor.

Both ends of the packaging cloth 9 in each reel-type packaged flexible assembly module 8 are provided with a plurality of holes 11 and hook-and-loop fasteners 12 for fixing the reel-type flexible photovoltaic power generation strip 4 and the mechanical connection between the adjacent packaging cloths 9. Both ends of the packaging cloth 9 is provided with an elongated and rod-shaped hard material with the same width as the packaging cloth, which horizontally passes through the packaging cloth 9 for supporting the packaging cloth, preventing deformation of the packaging cloth in use, and improving the horizontal mechanical strength of the reel-type flexible photovoltaic power generation strip 4.

A plurality of holes 11 are provided to engage with the adjacent reel-type packaged flexible assembly module; the hook-and-loop fastener 12 is arranged to bonded connect two reel-type packaged flexible assembly modules; the hard material has the same width as the packaging cloth and is elongated and rod-shaped, and it is arranged at the head and end of the packaging cloth and horizontally passes through the packaging cloth.

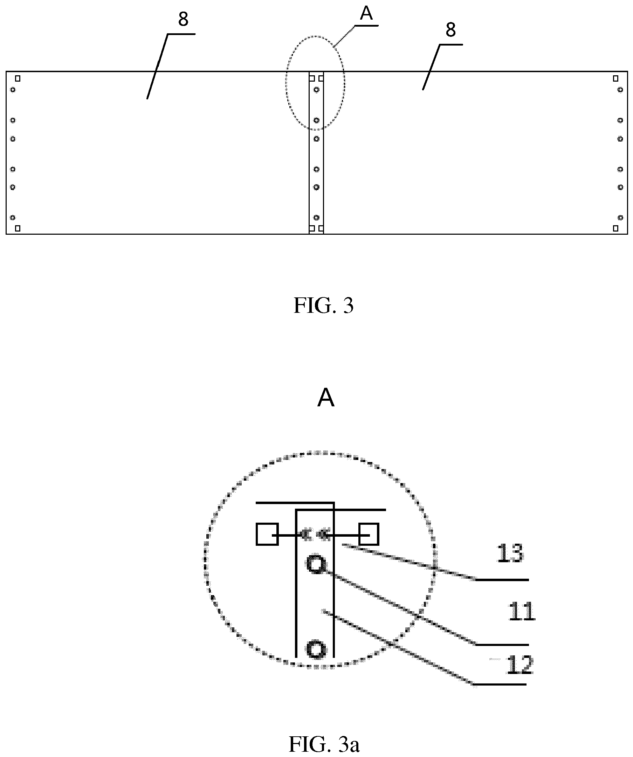

In the example shown in FIGS. 3 and 3a, the reel-type packaged flexible assembly modules 8 are connected in parallel to the electrical system through connectors 13, and the adjacent two reel-type packaged flexible assembly modules 8 are engaged by means of holes 11 and connected in a bonded manner by means of hook-and-loop fasteners 12.

The trailer-type energy vehicle may further comprise a bonded-type flexible photovoltaic assembly device directly attached to the top panel and the side panel of the energy vehicle, the flexible photovoltaic assembly device on the top panel and the side panel may form three standard strings, and each standard string is connected to a maximum power point tracking device. The bonded-type flexible photovoltaic assembly device can be a flexible photovoltaic assembly designed by adopting ETFE (ethylene-tetra-fluoro-ethylene copolymer) flexible packaging, and can be directly attached to the openable top panel and the facade side panel of the trailer-type compartment.

A photovoltaic assembly device is arranged on the top panel and the side panel of the trailer-type compartment 1 to further improve the power generation capacity of the trailer-type energy vehicle. Since the top panel and the side panel of the trailer-type compartment 1 are rotatably openable, the photovoltaic assembly device on the top panel and the side panel can present a better angle according to the sunlight, which is beneficial to improving the power generation efficiency of the photovoltaic assembly device.

The top panel and the side panel of the trailer-type compartment 1 are provided with a cover and a groove. That is, the top panel and the side panel of the trailer-type compartment 1 are designed with a groove for arranging cables, and the cables can connect the photovoltaic assembly devices in series and in parallel, and a cover is arranged on the groove to protect the cable inside.

In some embodiments, the photovoltaic assembly device may be attached to the outer surface of the side panel of the trailer-type compartment, and the lower end of the side panel of the trailer-type compartment may be unfolded outward. In other embodiments, the photovoltaic assembly device may be attached to the inner surface of the side panel of the trailer-type compartment, and the upper end of the side panel of the trailer-type compartment may be unfolded outward. In other embodiments, the photovoltaic assembly device may be attached to the inner surface and the outer surface of the side panel of the trailer-type compartment, and the upper end of the side panel of the trailer-type compartment may be unfolded outward. When the side panel is not unfolded, the photovoltaic assembly device on the outer surface can be used for power generation, and when the upper end of the side panel is unfolded outward, the photovoltaic assembly device on the inner surface can be used for power generation.

The electrical system can be partially or completely arranged outside the winding mechanical device, but in an embodiment, the winding mechanical device is provided with an electrical system therein, the electrical system comprises a maximum power point tracking device, a DC power supply, a charging circuit, an AC power supply, a battery and a panel circuit, each group of bus cables is connected with a maximum power point tracking device, the maximum power point tracking device is connected with any one or both of the battery and the AC power supply after passing through the DC power supply, and is finally connected with a panel circuit, and an inverter is connected between the DC power supply and the AC power supply or the AC power supply is provided with an inverter.

The power of each maximum power point tracking device MPPT may be 1200 W.

The DC power supply converts the fluctuating photovoltaic power generation into a stable DC power supply and is arranged to charge the battery and drive the external DC electric appliance and the internal DC electric appliance to work (for example, supply for the motor of the winding mechanical device, supply for the inverter, and the like). The DC power supply can output direct current with various voltage levels of 5V, 12V and 24V, and the power may be 1000 W.

The AC power supply is provided with an inverter, and is arranged to convert direct current from a DC power supply or a battery into an AC power supply of 110V or 220V through the inverter to be used by an external AC appliance, and the power may be 1200 W.

The battery is for store energy, and it is also called energy storage battery, a lithium battery may be used, and energy storage may be 2000 Wh.

The charging circuit uses the alternating current supplied from the outside to charge the battery when the outside world has no sunshine or does not use solar energy to generate electricity.

The panel circuit comprises a protection circuit. The protection circuit uses a fuse to protect the output power supply from short circuit. The panel comprises an AC socket, a DC socket, a USB socket and a charging interface.

The panel is electrically connected with the protection circuit, the input and output ports are positioned on the panel, and the input and output ports comprise an input port and an output port.

In an exemplary embodiment, the input and output ports are located on the AC socket, DC socket, USB socket and charging interface; the jacks of the AC socket, DC socket and USB socket are the output ports, and the jack of the charging interface is the input port.

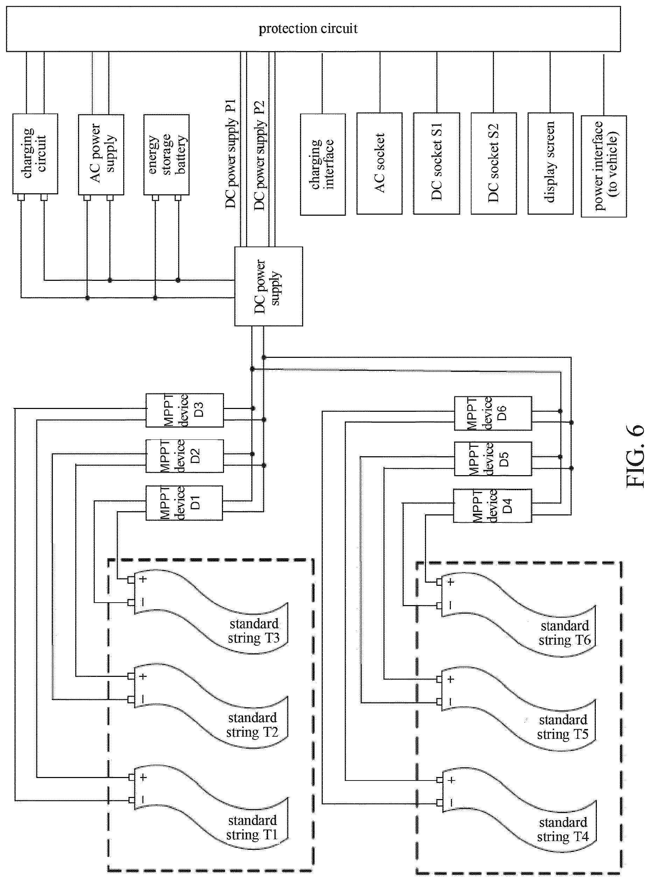

The relationship between the panel, panel circuit, protection circuit, input and output ports, functional panel, electrical system, power interface circuit and energy interface is as follows:
the panel circuit comprises a protection circuit, and input and output ports are arranged on the panel;
the function panel is arranged on the front of the energy vehicle and comprises a power interface circuit (the energy interface for supplying power to external vehicle(s) in need of electricity is located on the power interface circuit), an energy switch and a data display screen (i.e., the display screen in FIG. 6), the function panel is independent of the electrical system.

The relationship between the bus device, connector, connection port and plug-in terminal is as follows:
the bus device comprises three connectors, the connector is provided with a plug-in terminal, the interface formed on the plug-in terminal is a connection port, and a connector can be arranged at one end of the cable (see FIG. 4).

FIG. 6 schematically shows a structural diagram of a circuit of a trailer-type energy vehicle. The photovoltaic power generation device on the trailer-type compartment forms three standard strings. The photovoltaic assembly device on the side panel of the trailer-type compartment forms two standard strings, namely standard string T1 and standard string T2, and the photovoltaic assembly device on the top panel of the trailer-type compartment forms one standard string, namely standard string T3. The three standard strings T1 - T3 are respectively electrically connected to the DC power supply through three maximum power point tracking devices (namely, MPPT device D1 - MPPT device D3, respectively).

The reel-type flexible photovoltaic power generation strip in the reel-type packaged flexible photovoltaic power generation device 2 forms three standard strings, namely, standard string T4 - standard string T6, which are respectively electrically connected to the DC power supply through the other three maximum power point tracking devices (namely, MPPT device D4 - MPPT device D6, respectively).

The DC power supply can be electrically connected to the protection circuit and the energy storage battery, and can be electrically connected to the AC power supply through the inverter. The DC power supply and the AC power supply can be electrically connected to the protection circuit. The protection circuit is electrically connected to the input and output ports on the panel, such as a charging interface, an AC socket, two DC sockets (DC socket S1 and DC socket S2, respectively), a display screen, an energy interface, etc. The charging circuit is electrically connected with the energy storage battery so as to use external alternating current to charge the energy storage battery when needed.

When in use, the trailer-type energy vehicle based on flexible solar power generation can be towed behind the automobile and can supply power to the automobile through the energy interface circuit of the towing system. Both the top panel and the side panel of the energy vehicle can be provided with a flexible photovoltaic assembly device to generate electricity to produce electrical energy. When high-power power generation is required, the top panel can be opened, and the reel-type flexible photovoltaic power generation strip on the reel can be unfolded to generate electricity. Since an energy storage battery is arranged inside, electricity can still be stably supplied even under the condition that the sunshine is not sufficient. Thus, the trailer-type energy vehicle based on flexible solar power generation is suitable for long-term field use, and can supply power for high-power appliances, and it is easy to store. When it is not used, it takes up less space.

Embodiments described above are used for illustration of this application but not to limit the scope of this application, and the scope of this application is determined by the appended claims.

## Claims

1. A trailer-type energy vehicle, comprising a trailer-type compartment (1), a reel-type packaged flexible photovoltaic power generation device (2) and an electrical system (3);
wherein the reel-type packaged flexible photovoltaic power generation device (2) is arranged in the trailer-type compartment (1) and comprises a winding mechanical device and a reel-type flexible photovoltaic power generation strip (4), and the reel-type flexible photovoltaic power generation strip (4) is wound on the winding mechanical device;
the electrical system (3) is connected with the reel-type flexible photovoltaic power generation strip (4).

2. The trailer-type energy vehicle according to claim 1, wherein the winding mechanical device comprises a roller, and the trailer-type energy vehicle further comprises a panel arranged at the center of a side surface of the roller, and the panel is provided with input and output ports and is connected with the electrical system (3).

3. The trailer-type energy vehicle according to claim 1 or 2, wherein the trailer-type compartment (1) is expandable and adopts an openable side panel and an openable top panel.

4. The trailer-type energy vehicle according to any one of claims 1-3, wherein the reel-type flexible photovoltaic power generation strip (4) comprises a plurality of reel-type packaged flexible assembly modules (8), the reel-type packaged flexible assembly module (8) comprising:
a packaging cloth (9);
a flexible photovoltaic assembly (10) attached to the packaging cloth (9) or a plurality of flexible photovoltaic assemblies (10) attached to the packaging cloth (9); and
a cable.

5. The trailer-type energy vehicle according to claim 4, wherein the surface of the packaging cloth (9) is provided with a thin tubular storage hidden bag, the overall layout of the thin tubular storage hidden bag is "H" shaped, the middle horizontal part is arranged to accommodate the serial cable (15) between the horizontally arranged flexible photovoltaic assemblies (10), and the longitudinal parts at both sides are arranged to arrange the bus cable bundle (16).

6. The trailer-type energy vehicle according to any one of claims 1-5, wherein two or four ends of the reel-type packaged flexible assembly module (8) are designed with a "T" shaped bus device (17) and reserved with a connector, and the connector is arranged to realize electrical in parallel connection of the two reel-type packaged flexible assembly modules (8) or to realize connection of the reel-type packaged flexible assembly module (8) with the electrical system (3).

7. The trailer-type energy vehicle according to any one of claims 4-6, wherein the plurality of reel-type packaged flexible assembly modules (8) are connected in parallel through a group of bus cables to form a standard string, each group of bus cables is connected to a maximum power point tracking device provided in the electrical system (3), and each group of bus cables includes one positive cable and one negative cable.

8. The trailer-type energy vehicle according to any one of claims 1-7, wherein the winding mechanical device comprises a roller, a rocker arm and an auxiliary motor, wherein:
the roller is arranged to warping and accommodating the reel-type flexible photovoltaic power generation strip (4), and two ends of the roller are provided with flanging;
the rocker arm is a retractable rocker arm and is arranged to rotate the roller;
the auxiliary motor is linked with the roller and is arranged to rotate the roller through electric power.

9. The trailer-type energy vehicle according to any one of claims 4-8, wherein both ends of the packaging cloth (9) in each of the reel-type packaged flexible assembly modules (8) are provided with one or more of a hole (11), a hook-and-loop fastener (12) and a hard material, wherein
a plurality of holes (11) are provided to engage the two reel-type packaged flexible assembly modules (8);
the hook-and-loop fastener (12) is arranged to bonded connect the two reel-type packaged flexible assembly modules (8);
the hard material has the same width as the packaging cloth (9), is elongated and rod-shaped, is arranged at both ends of the packaging cloth (9) and horizontally passes through the packaging cloth (9).

10. The trailer-type energy vehicle according to any one of claims 1-9, wherein the trailer-type energy vehicle further comprises a flexible photovoltaic assembly device directly attached to a top panel and a side panel of the trailer-type compartment (1), and the flexible photovoltaic assembly device is connected to the electrical system (3).

11. The trailer-type energy vehicle according to claim 10, wherein the flexible photovoltaic assembly device attached to the top panel and side panel of the trailer-type compartment (1) constitutes three standard strings, each standard string being connected to a maximum power point tracking device in the electrical system (3).

12. The trailer-type energy vehicle according to any one of claims 1-11, wherein the electrical system (3) comprises:
a maximum power point tracking device;
a DC power supply connected to the maximum power point tracking device;
a panel circuit connected with the DC power supply, the panel circuit comprising a protection circuit;
wherein the panel circuit is connected with the input and output ports on the panel.

13. The trailer-type energy vehicle according to claim 12, wherein the electrical system (3) further comprises one or more of an energy storage battery, an AC power supply, and a charging circuit connected to the DC power supply, wherein:
the energy storage battery is arranged to store energy;
the AC power supply is provided with an inverter or is connected with the DC power supply through an inverter and is arranged to be connected with the protection circuit so as to supply power to an external AC electrical appliance;
the charging circuit is arranged to charge the energy storage battery by using the alternating current supplied from the outside.

14. The trailer-type energy vehicle according to any one of claims 1-13, wherein the trailer-type energy vehicle further comprises a towing hook (5) connected to the trailer-type compartment (1) and a power interface circuit (6) arranged on the towing hook (5), and the power interface circuit (6) is connected to the electrical system (3) and arranged to supply power to an external vehicle in need of electricity.

15. The trailer-type energy vehicle according to any one of claims 1-14, wherein the electrical system (3) is disposed inside the winding mechanical device.
